# EUROPEAN PATENT SPECIFICATION

(11) **EP 4 300 231 B1**
(45) Date of publication and mention of the grant of the patent: **04.11.2026**
(21) Application number: 23182288.3
(22) Date of filing: 29.06.2023
(51) Int. Cl.: G05B 19/423

(54) **TEACHING METHOD AND TEACHING APPARATUS**
LEHRVERFAHREN UND LEHRVORRICHTUNG
PROCÉDÉ ET APPAREIL D'ENSEIGNEMENT

(30) Priority: 30.06.2022 JP 2022105606
(43) Date of publication of application: 03.01.2024
(73) Proprietor: Seiko Epson Corporation, Tokyo 160-8801 (JP)
(72) Inventor: HAGIO, Masaaki, Suwa-shi, Nagano 392-8502 (JP); KOBAYASHI, Minoru, Suwa-shi, Nagano 392-8502 (JP)
(74) Representative: MERH-IP Matias Erny Reichl Hoffmann Patentanwälte PartG mbB

(56) References cited:
- US-A1- 2013 236 050
- US-A1- 2015 094 855
- US-A1- 2022 032 448

## Description

The present application is based on, and claims priority from JP Application Serial Number 2022-105606, filed June 30, 5 2022.

### BACKGROUND

### 1. Technical Field

The present disclosure relates to a teaching method and a teaching apparatus.

### 2. Related Art

Recently, in factories, due to rises in labor costs and shortages of human resources, work of manufacturing, processing, assembly, etc. has been performed using robots having robot arms and work that had been manually performed has been acceleratingly automated.

For the robot to perform work having predetermined details of work, for example, a teaching method of teaching the details of work to the robot in advance using a teaching apparatus as shown in JP-A-2006-142480 is known. In the teaching method disclosed in JP-A-2006-142480, a worker sets the robot arm in a position and an attitude desired to move in work and presses a teaching button provided in the teaching apparatus, and the position and the attitude of the robot arm at the time are stored. Thereby, a motion program corresponding to the details of work is generated, that is, teaching is performed. Additionally, US 2013/236 050 A1 discloses a method for improving the accuracy of direct teaching in robots. It addresses the problem of noise and distortion in trajectories created by user movements, wherein the approach of US 2013/236 050 A1 focuses on refining the recorded trajectory based on motion characteristics, aiming for a more accurate representation of the user's intended movements.

However, when a worker with low skills performs teaching, it is difficult to move the robot arm to the desired position and attitude during teaching, and it is hard to perform quick and accurate teaching.

### SUMMARY

The invention is defined by the method of claim 1 and the apparatus of claim 5. Optional aspects of the invention are provided by the dependent claims.

### BRIEF DESCRIPTION OF THE DRAWINGS

FIG. 1 shows an overall configuration of a robot system including a first embodiment of a teaching apparatus executing a teaching method of the present disclosure.
FIG. 2 is a block diagram of the robot system shown in FIG. 1.
FIG. 3 is a block diagram of the teaching apparatus shown in FIG. 2.
FIG. 4 is a perspective view showing a state during a teaching motion of the robot system shown in FIG. 1.
FIG. 5 is a schematic diagram showing specific control points stored in the teaching method of the present disclosure.
FIG. 6 is a schematic diagram showing an area set in the teaching method of the present disclosure.
FIG. 7 shows an example of a simulated image displayed in the teaching method of the present disclosure.
FIG. 8 is a flowchart showing an example of the teaching method of the present disclosure.
FIG. 9 is a schematic diagram showing an area and a teaching candidate point set by a second embodiment of the teaching apparatus of the present disclosure.
FIG. 10 is a flowchart showing an example of the teaching method executed by a third embodiment of the teaching apparatus of the present disclosure.

### DESCRIPTION OF EXEMPLARY EMBODIMENTS

As below, a teaching method and a teaching apparatus of the present disclosure will be explained in detail based on preferred embodiments shown in the accompanying drawings.

### First Embodiment

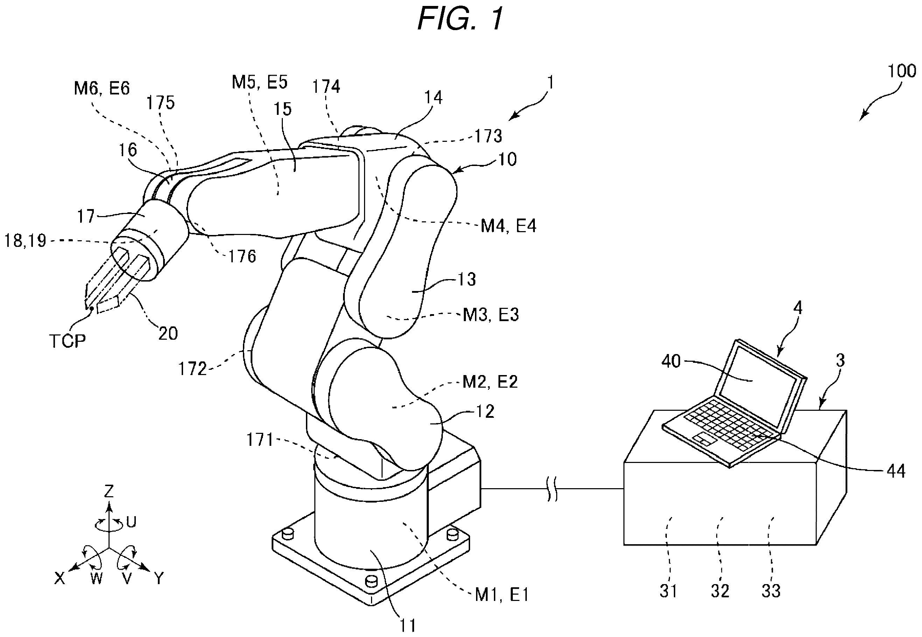

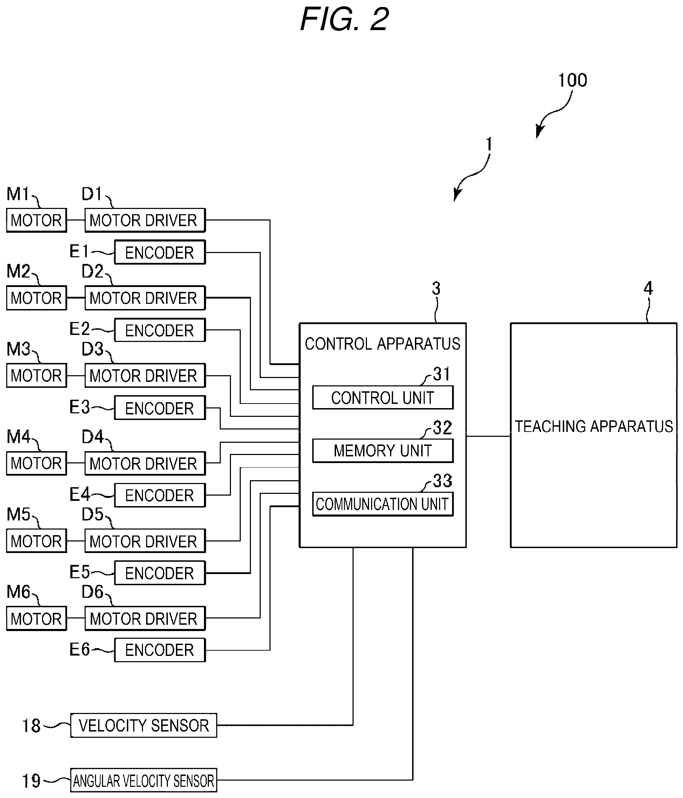

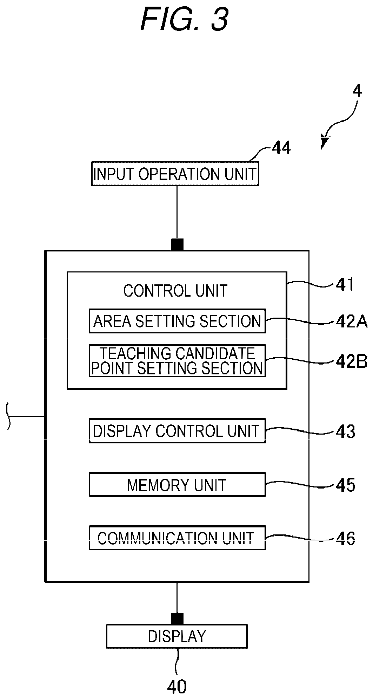

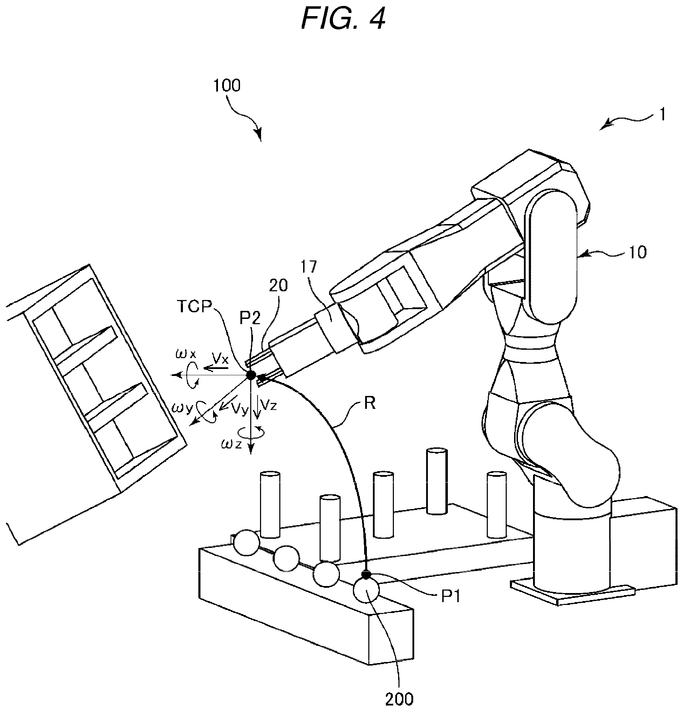

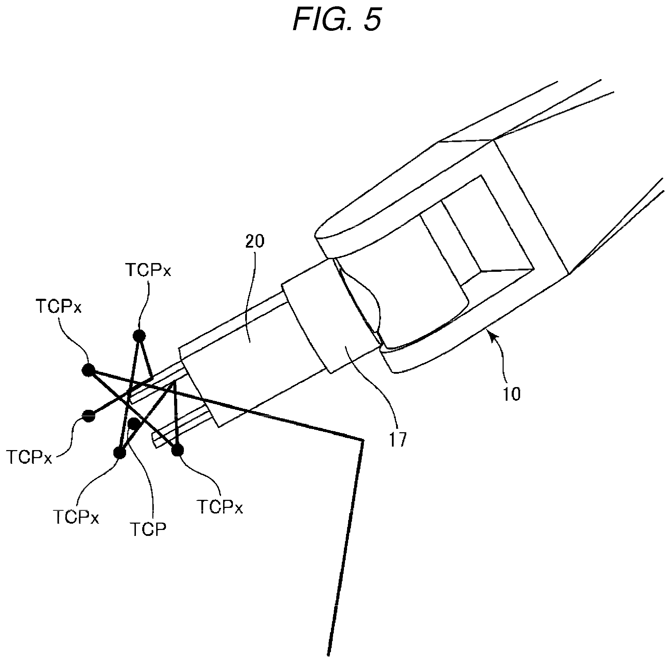

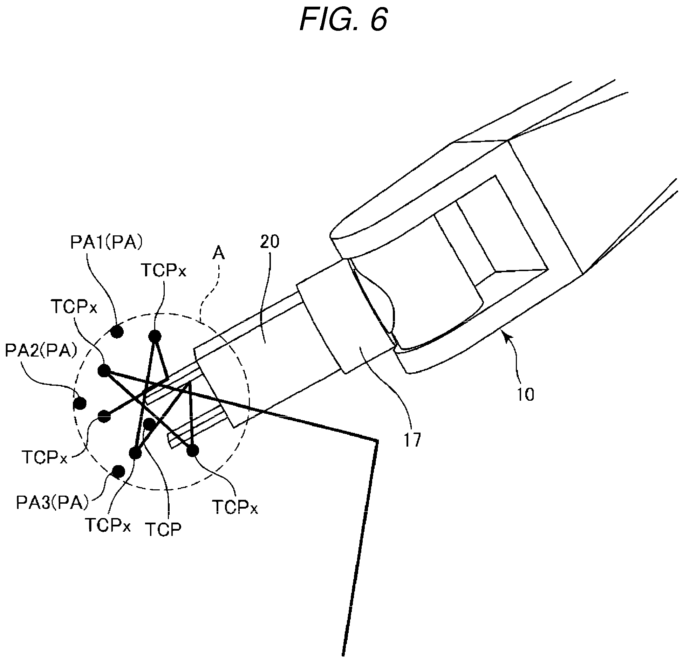

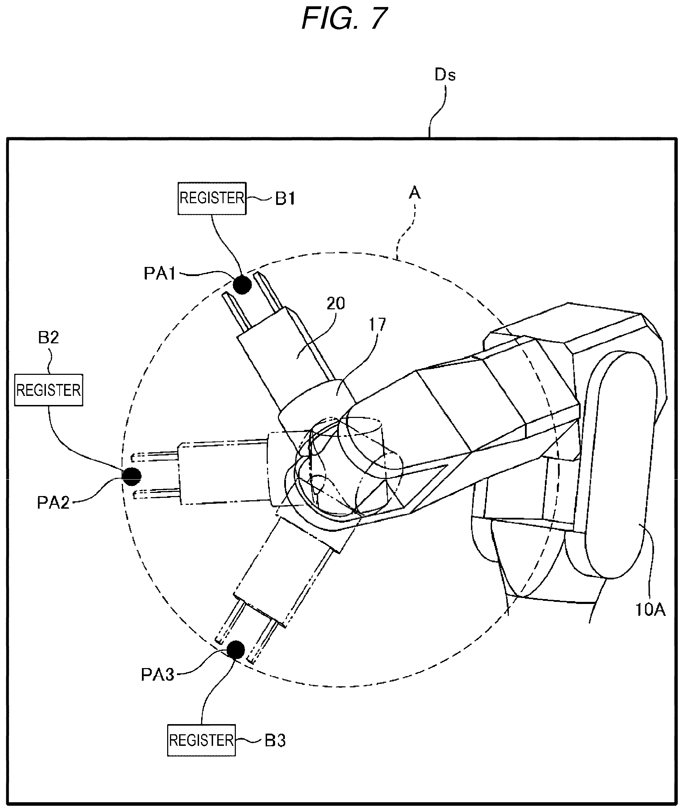

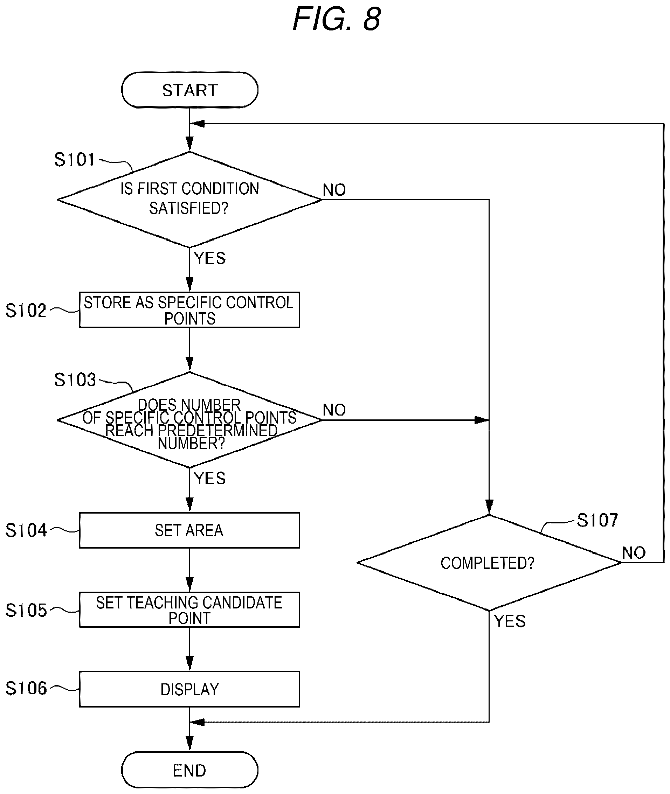

FIG. 1 shows an overall configuration of a robot system including a first embodiment of a teaching apparatus executing a teaching method of the present disclosure. FIG. 2 is a block diagram of the robot system shown in FIG. 1. FIG. 3 is a block diagram of the teaching apparatus shown in FIG. 2. FIG. 4 is a perspective view showing a state during a teaching motion of the robot system shown in FIG. 1. FIG. 5 is a schematic diagram showing specific control points stored in the teaching method of the present disclosure. FIG. 6 is a schematic diagram showing an area set in the teaching method of the present disclosure. FIG. 7 shows an example of a simulated image displayed in the teaching method of the present disclosure. FIG. 8 is a flowchart showing an example of the teaching method of the present disclosure.

Hereinafter, for convenience of explanation, with respect to a robot arm, a base 11 side in FIG. 1 is also referred to as "proximal end" and the opposite side thereto, i.e., an end effector 20 side is also referred to as "distal end".

As shown in FIG. 1, a robot system 100 includes a robot 1, a control apparatus 3 controlling actuation of the respective units of the robot 1, and a teaching apparatus 4 of the present disclosure.

First, the robot 1 is explained.

The robot 1 shown in FIG. 1 is a single-arm six-axis vertical articulated robot in the embodiment and has a base 11 and a robot arm 10. An end effector 20 may be attached to the distal end portion of the robot arm 10. Note that the end effector 20 may be a component element of the robot 1, or a separate member from the robot 1, that is, not a component element of the robot 1.

The robot 1 is not limited to the illustrated configuration, but may be e.g., a dual-arm articulated robot. Or, the robot 1 may be a horizontal articulated robot.

The base 11 is a supporter supporting the robot arm 10 drivably at the proximal end side thereof and fixed to e.g., a floor within a factory. The base 11 of the robot 1 is electrically coupled to the control apparatus 3 via a relay cable. Note that the coupling between the robot 1 and the control apparatus 3 is not limited to the wired coupling like the configuration shown in FIG. 1, but may be e.g., wireless coupling. Or, the robot and the control apparatus may be coupled via a network such as the Internet.

In the embodiment, the robot arm 10 has a first arm 12, a second arm 13, a third arm 14, a fourth arm 15, a fifth arm 16, and a sixth arm 17 and these arms are sequentially coupled from the base 11 side. Note that the number of arms of the robot arm 10 is not limited to six, but may be one, two, three, four, five, seven, or more. The sizes including the entire lengths of the respective arms are respectively not particularly limited, but can be appropriately set.

The base 11 and the first arm 12 are coupled via a joint 171. Further, the first arm 12 is pivotable around a first pivot axis extending in vertical axis directions as a pivot center relative to the base 11. The first pivot axis is aligned with the normal of the floor surface of the floor to which the base 11 is fixed, and the whole robot arm 10 may rotate in both a forward direction and a backward direction around the first pivot axis.

The first arm 12 and the second arm 13 are coupled via a joint 172. Further, the second arm 13 is pivotable around a second pivot axis extending in the horizontal directions as a pivot center relative to the first arm 12.

The second arm 13 and the third arm 14 are coupled via a joint 173. Further, the third arm 14 is pivotable around a third pivot axis extending in the horizontal directions as a pivot center relative to the second arm 13. The third pivot axis is parallel to the second pivot axis.

The third arm 14 and the fourth arm 15 are coupled via a joint 174. Further, the fourth arm 15 is pivotable around a fourth pivot axis parallel to the center axis directions of the third arm 14 as a pivot center relative to the third arm 14. The fourth pivot axis is orthogonal to the third pivot axis.

The fourth arm 15 and the fifth arm 16 are coupled via a joint 175. Further, the fifth arm 16 is pivotable around a fifth pivot axis as a pivot center relative to the fourth arm 15. The fifth pivot axis is orthogonal to the fourth pivot axis.

The fifth arm 16 and the sixth arm 17 are coupled via a joint 176. Further, the sixth arm 17 is pivotable around a sixth pivot axis as a pivot center relative to the fifth arm 16. The sixth pivot axis is orthogonal to the fifth pivot axis.

The sixth arm 17 is a robot distal end portion located at the most distal end side of the robot arm 10. The sixth arm 17 may be displaced together with the end effector 20 by driving of the robot arm 10.

The end effector 20 shown in FIG. 1 has a gripping portion that may grip a workpiece 200 or a tool. In a state in which the end effector 20 is attached to the sixth arm 17, the distal end portion of the end effector 20 is a control point TCP.

Inside of the sixth arm 17, e.g., a velocity sensor 18 and an angular velocity sensor 19 having structures including crystal quartz vibrators are placed. The velocity sensor 18 may detect a movement velocity V, i.e., a cube root of an absolute velocity = (Vx + Vy + Vz) in XYZ coordinates of the control point TCP (see FIG. 4). The angular velocity sensor 19 may detect an angular velocity ω of the control point TCP. The angular velocity ω of the control point TCP is obtained by a cube root of an angular velocity ωx around an X-axis, an angular velocity ωy around a Y-axis, and an angular velocity ωz around a Z-axis defining a coordinate system set for the control point TCP (see FIG. 4).

The information detected by the velocity sensor 18 and the angular velocity sensor 19 is transmitted to the control apparatus 3. That is, the respective signals from the velocity sensor 18 and the angular velocity sensor 19 are transmitted to a control unit 31 via a communication unit 33 and predetermined signal processing is performed thereon. Further, the respective signals from the velocity sensor 18 and the angular velocity sensor 19 are transmitted to a control unit 41 of the teaching apparatus 4 via the control apparatus 3 and predetermined signal processing is performed thereon. Thereby, the teaching apparatus 4 may detect and calculate the movement velocity V and the angular velocity ω of the control point TCP.

The robot 1 includes a motor M1, a motor M2, a motor M3, a motor M4, a motor M5, and a motor M6 as drive units and an encoder E1, an encoder E2, an encoder E3, an encoder E4, an encoder E5, and an encoder E6. The motor M1 is provided inside the joint 171 and rotates the first arm 12 around the first pivot axis relative to the base 11. The motor M2 is provided inside the joint 172 and relatively rotates the first arm 12 and the second arm 13 around the second pivot axis. The motor M3 is provided inside the joint 173 and relatively rotates the second arm 13 and the third arm 14 around the third pivot axis. The motor M4 is provided inside the joint 174 and relatively rotates the third arm 14 and the fourth arm 15 around the fourth pivot axis. The motor M5 is provided inside the joint 175 and relatively rotates the fourth arm 15 and the fifth arm 16 around the fifth pivot axis. The motor M6 is provided inside the joint 176 and relatively rotates the fifth arm 16 and the sixth arm 17 around the sixth pivot axis.

Further, the encoder E1 is provided inside the joint 171 and detects the position of the motor M1. The encoder E2 is provided inside the joint 172 and detects the position of the motor M2. The encoder E3 is provided inside the joint 173 and detects the position of the motor M3. The encoder E4 is provided inside the joint 174 and detects the position of the motor M4. The encoder E5 is provided inside the fifth arm 16 and detects the position of the motor M5. The encoder E6 is provided inside the sixth arm 17 and detects the position of the motor M6. Note that "detect the position" here is to detect the rotation angle of the motor, i.e., an amount of forward or backward rotation and an angular velocity, and the detected information is referred to as "position information".

As shown in FIG. 2, motor driver D1 to motor driver D6 are coupled to the corresponding motor M1 to motor M6, respectively, and control driving of the motors. The motor driver D1 to motor driver D6 are provided inside the joint 171, the joint 172, the joint 173, the joint 174, the fifth arm 16, and the sixth arm 17, respectively.

The encoder E1 to encoder E6, the motor M1 to motor M6, and the motor driver D1 to motor driver D6 are respectively electrically coupled to the control apparatus 3. The position information of the motor M1 to motor M6 detected by the encoder E1 to encoder E6, i.e., the amounts of rotation are transmitted as electrical signals to the control apparatus 3. The control apparatus 3 outputs control signals to the motor driver D1 to motor driver D6 shown in FIG. 2 to drive the motor M1 to motor M6 based on the position information. That is, to control the robot arm 10 is to control driving of the motor M1 to motor M6 to control actuation of the first arm 12 to sixth arm 17 of the robot arm 10.

The end effector 20 may be detachably attached to the distal end portion of the robot arm 10. In the embodiment, the end effector 20 includes a hand having a pair of claw portions movable close to or apart from each other and gripping and releasing the workpiece 200 or a tool (not shown) by the respective claw portions. A force detector attached to the end effector 20 may detect magnitude and direction of a reaction force of a gripping force when the claw portions grip the workpiece 200.

Note that the end effector 20 is not limited to the illustrated configuration, but may have e.g., a suction portion and grip the workpiece 200 or a tool by suction using the suction portion. Or, the end effector 20 may be a tool e.g., a polisher, a grinder, a cutter, a spray gun, a laser beam irradiator, a driver, a wrench, or the like.

Next, the control apparatus 3 and the teaching apparatus 4 will be explained.

As shown in FIG. 1, the control apparatus 3 is placed in a position apart from the robot 1 in the embodiment. The control apparatus 3 is not limited to the configuration, but may be provided inside the base 11. Further, the control apparatus 3 has a function of controlling driving of the robot 1 and is electrically coupled to the above described respective units of the robot 1. The control apparatus 3 has the control unit 31, a memory unit 32, and the communication unit 33. These respective units are coupled to mutually communicate via e.g., a bus.

The control unit 31 includes e.g., a CPU (Central Processing Unit) and reads out and executes various programs such as a motion program stored in the memory unit 32. The signals generated by the control unit 31 are transmitted to the respective units of the robot 1 via the communication unit 33 and the signals from the respective units of the robot 1 are received by the control unit 31 via the communication unit 33. The signals received by the control unit 31 are subjected to predetermined processing and stored in the memory unit 32 or used for control of the motion of the robot arm 10 and teaching work. By the control unit 31, the robot arm 10 may execute predetermined work in predetermined conditions.

The memory unit 32 stores the various programs etc. to be executed by the control unit 31. The memory unit 32 includes e.g., a volatile memory such as a RAM (Random Access Memory), a nonvolatile memory such as a ROM (Read Only Memory), and a detachable external memory device.

The communication unit 33 transmits and receives signals between another apparatus and itself using an external interface, e.g., a wired LAN (Local Area Network), a wireless LAN, or the like. In this case, the communication may be made via a server (not shown) or via a network such as the Internet.

The teaching apparatus 4 is an apparatus for executing the teaching method of the present disclosure. The teaching apparatus 4 creates a work motion program of the robot arm 10 before the start of work (work motion). That is, the teaching apparatus 4 is an apparatus performing teaching. The types of teaching includes direct teaching and indirect teaching.

The direct teaching refers to storing positions and attitudes of the robot arm 10 while a user or a worker (hereinafter, simply referred to as "user") directly applies a force and moves the robot arm 10 according to a motion desired to be performed in work and creating a work motion program.

The indirect teaching refers to storing positions and attitudes of the robot arm 10 or a virtual robot arm while the user moves the robot arm 10 or moves the virtual robot arm in simulation using the teaching apparatus 4 according to a motion desired to be performed in work and creating a work motion program.

The present disclosure may be applied to the direct teaching or the indirect teaching. As below, a case where the direct teaching is performed will be explained as an example.

As shown in FIG. 1, the teaching apparatus 4 has a display 40 as a display unit and an input operation unit 44 and includes a notebook personal computer in the embodiment.

The input operation unit 44 includes a keyboard and a mouse (not shown) and the user appropriately operates these to perform input operation of various kinds of information. For example, pressing down of a teaching button, which will be described later, is executed by pressing of any key, e.g., the Enter key on the keyboard or by click operation of the mouse with a cursor or a pointer placed in a proper position on the display 40. Note that the teaching button may be placed in another location than the input operation unit 44.

The display 40 includes e.g., liquid crystal, organic EL, or the like and may display various display windows in colors or black and white. Note that the teaching apparatus 4 is not limited to the notebook personal computer, but may be a desktop personal computer or a tablet terminal.

As shown in FIG. 3, the teaching apparatus 4 has the control unit 41, a display control unit 43, a memory unit 45, and a communication unit 46.

The control unit 41 includes at least one processor e.g., a CPU (Central Processing Unit) and reads out and executes various programs such as a teaching program stored in the memory unit 45. The control unit 41 is a part also serving as an area setting section 42A and a teaching candidate point setting section 42B and executing the teaching method of the present disclosure as will be described later. The control performed by the control unit 41 will be described in detail later.

The display control unit 43 has a function of controlling actuation of the display 40. The display control unit 43 includes at least one processor such as a CPU or a GPU and reads out and executes a program stored in the memory unit 45. Thereby, display information displayed on the display 40 may be designated. The display information includes e.g., a simulated image Ds shown in FIG. 7.

The memory unit 45 includes e.g., a volatile memory such as a RAM (Random Access Memory), a nonvolatile memory such as a ROM (Read Only Memory), and a detachable external memory device. Further, in the memory unit 45, a program for execution of the teaching method of the present disclosure is stored. Furthermore, in the memory unit 45, during the execution of the teaching method of the present disclosure, positions and attitudes of specific control points TCPx, which will be described later, etc. are stored.

The communication unit 46 transmits and receives signals between the control apparatus 3 and itself using an external interface, e.g., a wired LAN (Local Area Network), a wireless LAN, or the like. In this case, the communication may be made via a server (not shown) or via a network such as the Internet. The communication unit 46 transmits information on the motion program stored in the memory unit 45 etc. to the control apparatus 3. Further, the communication unit 46 may receive the information stored in the memory unit 32 and store the information in the memory unit 45.

Next, an example of a motion (teaching motion) of the robot arm 10 during teaching will be explained using FIG. 4. Note that, in FIG. 4, a movement path of the control point TCP is shown by an arrow R.

First, the user changes the position and the attitude of the robot arm 10 to locate the control point TCP in a start position P1 by gripping a predetermined part of the robot arm 10. Then, when judging that the control point TCP is located in the start position P1, the user presses down the teaching button (not shown) and the position and the attitude of the robot arm 10 at the time are stored. Then, the user changes the position and the attitude of the robot arm 10 to locate the control point TCP in a target position P2. Then, when judging that the control point TCP is located in the target position P2, the user presses down the teaching button (not shown) and the position and the attitude of the robot arm 10 at the time are stored. In the above described manner, the teaching apparatus 4 generates the work motion program.

In the teaching, for example, a user with low skills, a user unfamiliar with teaching operation, a user replaced with significant changes of details of work, work conditions, or work objects including the workpiece 200, or a user under time pressure required to perform teaching in a short time (hereinafter, represented by "user with low skills") may make the above described motion.

For example, the user with low skills may have no idea about an appropriate position near the target position P2 and hesitate or take a long time to get an idea about a proper position. In this case, the trajectory of the control point TCP becomes a complex line with turns and twists near the target position P2. With the motion, teaching takes more time. In the present disclosure, the problem may be solved by the following method. As below, the method will be explained in detail.

The control unit 41 calculates and monitors the velocity and the angular velocity of the control point TCP during the teaching motion. That is, the control unit 41 calculates and monitors the movement velocity V of the control point TCP and the angular velocity ω of the control point TCP as needed based on the information detected by the velocity sensor 18 and the angular velocity sensor 19 during the teaching motion. Here, the movement velocity V of the control point TCP is the cube root of the absolute velocity = (Vx + Vy + Vz) in a distal end coordinate system. The angular velocity ω of the control point TCP is the cube root of the angular velocity ωx around the X-axis, the angular velocity ωy around the Y-axis, and the angular velocity ωz around the Z-axis defining the coordinate system set for the control point TCP.

In the control unit 41, the calculated movement velocity V is compared to a predetermined threshold, i.e., a first velocity V1 and the calculated angular velocity ω is compared to a predetermined threshold, i.e., a first angular velocity ω1. Note that the first velocity V1 and the first angular velocity ω1 are stored in the memory unit 45 in advance and timely read out and used for the above described comparisons.

A condition that the movement velocity V is equal to or lower than the first velocity V1 or the angular velocity ω is equal to or lower than the first angular velocity ω1 is referred to as "first condition". The first velocity V1 and the first angular velocity ω1 are respectively predetermined values and take low values on the assumption of a state in which the movement velocity or the rotation velocity of the control point TCP decreases and the control point halts or a state in which the control point is regarded as nearly coming to a halt.

In the embodiment, the first condition is a condition that one of V ≤ V1 and ω ≤ ω1 is satisfied. Note that, not limited to that, but the first condition may be a condition that both V ≤ V1 and ω ≤ ω1 are satisfied.

In the embodiment, the movement velocity V of the control point TCP and the angular velocity ω of the control point TCP are calculated using the information from the velocity sensor 18 and the angular velocity sensor 19, however, not limited to that. For example, the movement velocity V of the control point TCP and the angular velocity ω of the control point TCP may be calculated from position information over time detected by the encoder E1 to encoder E6 without using the velocity sensor 18 and the angular velocity sensor 19.

To locate the control point TCP in the target position P2 in the teaching motion, when a plurality of first conditions are satisfied, it is highly possible that the user hesitates to locate the position to teach or has no idea about the position to teach.

The control unit 41 stores the position of the control point TCP and the attitude of the robot arm 10 at the time when the first condition is satisfied in the memory unit 45. The attitude of the robot arm 10 may be calculated from the position information detected by the encoder E1 to encoder E6 at the time. Hereinafter, storing the position of the control point TCP and the attitude of the robot arm 10 at the time in the memory unit 45 is simply referred to as "storing the position and the attitude of the control point TCP". Further, hereinafter, the stored control point TCP is referred to as "specific control point TCPx" (x is a positive integer). For example, the control point TCP stored at the first time is the specific control point TCP1 and the control point TCP stored at the second time is the specific control point TCP2.

Note that, in the present disclosure, not limited to that, but only one of the position of the control point TCP and the attitude of the robot arm 10 may be stored in the memory unit 45 or the like.

As shown in FIGS. 5 and 6, when the number of specific control points TCPx is equal to or larger than N (N is an arbitrary integer of two or more), the control unit 41 sets an area A including all of the stored specific control points TCPx. N may be a predetermined particular value or can be appropriately set by the user. N = 5 in the illustrated configuration. In the present disclosure, the value of N is not particularly limited. As N is larger, the more proper area A may be set, however, the area A tends to be overgrown and the setting of the area A may take time. In consideration of the tendencies, N is preferably set to 3 to 35 and more preferably set to 4 to 20. Note that N is stored in the memory unit 45 and timely read out and used for the determination of the start of setting of the area A.

As shown in FIG. 6, in the embodiment, the area A is a minimum sphere including all specific control points TCPx. The spherical area A has an advantage that the area is easily perceived because of the simple shape and the effectiveness of the area is higher.

Note that the area A does not necessarily include all of the stored specific control points TCPx. For example, the area may have a shape excluding only one specific control point TCPx largely separated from the others, but including the other specific control points TCPx. Further, the shape of the area A is not limited to the sphere, but may be e.g., an oval sphere, a circular cylinder, a circular cone, a circular truncated cone, or another solid of revolution, or a polyhedron such as a regular polyhedron or a rectangular parallelepiped. Furthermore, the shape of the area A is not limited to the three-dimensional shape, but may be a two-dimensional shape.

As described above, the control unit 41 has the area setting section 42A setting the area A including the stored specific control points TCPx when the number of specific control points TCPx stored in the memory unit 45 is equal to or larger than N (N is an arbitrary integer of two or more).

The area A including the specific control points TCPx may be an area where the user hesitates to locate the teaching point. In other words, the area may be an area including the target position P2 or an area extremely close to the target position P2. It is highly possible that the real target position P2 exists somewhere within the area A.

As shown in FIG. 6, the control unit 41 sets at least one teaching candidate point PA within the area A. The teaching candidate point PA is a point as a candidate for teaching, e.g., a point as a candidate for the target position P2. In the illustrated configuration, the teaching candidate point PA is set on the outermost side within the area A, i.e., the surface. Further, in the embodiment, three teaching candidate points PA are set. Hereinafter, the three teaching candidate points PA are referred to as "teaching candidate point PA1", "teaching candidate point PA2", and "teaching candidate point PA3" sequentially from top to bottom, and these respective teaching candidate points PA1, PA2, PA3 are collectively referred to as "teaching candidate point PA".

In the present disclosure, the number of the set teaching candidate points PA is not particularly limited, but appropriately determined in consideration of conditions of the shape, the size, etc. of the area A. As the number of teaching candidate points PA is larger, the more proper teaching candidate point PA that coincides with the target position P2 may be set, however, when the number is too large, the judgement for selection by the user may be hindered or take time. In consideration of the tendencies, in the case of the spherical area A, the number of teaching candidate points PA is preferably set to 2 to 20 and more preferably set to 3 to 12.

In the embodiment, the teaching candidate point PA is preferentially set in a part in which the specific control points TCPx are eccentrically located of the surface of the area A. For example, straight lines from the center of the area A toward the respective specific control points TCPx may be set and the teaching candidate points PA are set at predetermined intervals at points at which the respective straight lines intersect the surface of the area A or parts immediately close inside thereof. Thereby, highly effective and adequate teaching candidate points PA with less waste may be set.

Note that, in the above described configuration, the teaching candidate points PA are set on the surface of the area A, however, not limited to that in the present disclosure. The teaching candidate points PA may be set in the center part of the area A, between the center part and the surface, e.g., at the midpoint and these may be set in combination.

When a plurality of teaching candidate points PA are set on the surface or the inside of the area A, the respective teaching candidate points PA may be set in an even distribution on the surface or the inside of the area A.

Further, in the above described configuration, the three teaching candidate points PA1, PA2, and PA3 are set, however, not limited to that in the present disclosure. For example, one, two, four, or more teaching candidate points PA may be set.

As described above, the control unit 41 has the teaching candidate point setting section 42B setting the teaching candidate points PA within the area A.

Further, the unit also calculates the attitude of the robot arm 10 with respect to each of the teaching candidate point PA1, the teaching candidate point PA2, and the teaching candidate point PA3. The calculation is performed based on e.g., the attitudes of the robot arm 10 at the specific control points TCPx. That is, it is assumed that there is a correlation among the position relationship between the respective specific control points TCPx and the teaching candidate point PA1 to teaching candidate point PA3, the attitudes of the robot arm 10 at the specific control points TCPx, and the attitudes of the robot arm 10 at the teaching candidate point PA1 to teaching candidate point PA3, and the angles of the respective joints 171 to 176 may be estimated.

Further, it is assumed that the attitude of the robot arm 10 at the specific control point TCPx is in a direction perpendicular to the center axis of the end effector 20 or the tangential line of the area A in which the sixth pivot axis passes the specific control point TCPx.

It is preferable that the attitude of the robot arm 10 at the specific control point TCPx is an attitude of an average of the attitudes of the teaching candidate point PA1 to teaching candidate point PA3, i.e., an average of the angles of the respective joints 171 to 176 at the teaching candidate point PA1 to teaching candidate point PA3. Thereby, the calculation of the attitude may be performed accurately and quickly. Note that the attitude may be an attitude of an average of the angles of the respective joints 171 to 176 at the two teaching candidate points PA close to each other. In this case, the calculation of the attitude may be performed more accurately and quickly.

The display control unit 43 controls actuation of the display 40 to display the simulated image Ds as shown in FIG. 7 on the display 40. The simulated image Ds shows a virtual robot arm 10A corresponding to the robot arm 10 displayed as a three-dimensional image, and the area A, the teaching candidate points PA1, PA2, PA3, a select button B1, a select button B2, a select button B3 are displayed on the image.

The select button B1 is a button for selection of the teaching candidate point PA1. The select button B2 is a button for selection of the teaching candidate point PA2. The select button B3 is a button for selection of the teaching candidate point PA3.

Pressing down of the select button B1, B2, or B3 is executed by click operation of the mouse with a cursor or a pointer placed in the position of the predetermined button selected from the buttons with signs "REGISTER" displayed on the simulated image Ds in the display 40. Or, the pressing down of the select button may be executed by pressing of any key, e.g., the Enter key on the keyboard.

With respect to the virtual robot arm 10A, an attitude when the control point TCP is located at the teaching candidate point PA1, an attitude when the control point TCP is located at the teaching candidate point PA2, and an attitude when the control point TCP is located at the teaching candidate point PA3 are displayed.

The teaching candidate points PA, particularly, the plurality of teaching candidate point PA1 to PA3 are displayed, and thereby, even when hesitating to locate the teaching point or having no idea about the position to teach, the user may set the proper teaching point, e.g., the target position P2 by viewing the presented teaching candidate points PA and selecting one of the select buttons B1 to B3. Accordingly, the user may perform quick teaching. Further, the virtual robot arm 10A that may be associated with the attitude of the robot arm 10 is displayed together with the teaching candidate points PA, and thereby, selection of the select buttons B1 to B3 may be performed more accurately.

As described above, the teaching apparatus 4 is an apparatus teaching the robot 1 having the robot arm 10. Further, the teaching apparatus 4 includes the memory unit 45 storing the position or the attitude of the control point TCP when the movement velocity V of the control point TCP set for the robot arm 10 is equal to or lower than the predetermined first velocity V1 or the angular velocity ω of the control point TCP is equal to or lower than the predetermined first angular velocity ω1 during the teaching motion of the robot arm 10, the area setting section 42A setting the area A including the specific control points TCPx when the number of specific control points TCPx as the control points TCP stored in the memory unit 45 is equal to or larger than N (N is an arbitrary integer of two or more), and the teaching candidate point setting section 42B setting the teaching candidate points PA within the area A. Thereby, even when the user with low skills perform teaching, locating may be easily performed by selection of the set teaching candidate point PA and quick and accurate teaching may be performed.

Note that, in the embodiment, the set teaching candidate point PA is displayed on the display unit, however, the present disclosure is not limited to that. The user may be informed by another method than the display on the display unit.

For example, when the control point TCP contacts or approaches the teaching candidate point PA during the teaching motion, the user may be informed by reporting using sound or by lighting of a lamp placed in a predetermined location of the robot 1.

Next, an example of the teaching method of the present disclosure using the teaching apparatus 4 will be explained using the flowchart shown in FIG. 8. In the following description, the explanation will be made immediately after the start of the teaching motion. Note that the following step S101 to step S105 and step S107 are executed by the control unit 41 and step S106 is executed by the display control unit 43. Of the steps, step S104 is executed by the area setting section 42A and step S105 is executed by the teaching candidate point setting section 42B.

First, at step S101, whether the first condition is satisfied is determined. That is, whether the movement velocity V of the control point TCP is equal to or lower than the predetermined first velocity V1 or the angular velocity ω is equal to or lower than the predetermined first angular velocity ω1 is determined. In other words, whether one of V ≤ V1 and ω ≤ ω1 is satisfied is determined.

When a determination that the first condition is satisfied is made at step S101, at step S102, the position and the attitude of the control point TCP when the first condition is satisfied are stored in the memory unit 45. The stored control point TCP is also referred to as the specific control point TCPx. Further, the number of stored specific control points TCPx is also stored. This step S102 is a first step of storing the position or the attitude of the control point TCP when the movement velocity V of the control point TCP is equal to or lower than the predetermined first velocity V1 or the angular velocity ω of the control point TCP is equal to or lower than the predetermined first angular velocity ω1 during the teaching motion as the specific control point TCPx.

On the other hand, when a determination that the first condition is not satisfied is made at step S101, the processing goes to step S107 and whether teaching is completed is determined. The determination at step S107 is made based on e.g., whether a teaching completion button (not shown) is pressed.

At step S107, when a determination that the teaching is not completed is made, the processing returns to step S101 and, when a determination that the teaching is completed is made, the program ends.

Then, at step S103, whether the number of specific control points TCPx reaches a predetermined number N (N is an arbitrary integer of two or more) is determined. When a determination that the number of specific control points TCPx reaches N is made at step S103, the processing goes to step S104 and, when a determination that the number of specific control points TCPx does not reach N is made at step S103, the processing goes to step S107.

At step S104, the area A including the stored N respective specific control points TCPx is set. In the embodiment, the area A is a minimum sphere including the specific control points TCPx. In other words, the minimum sphere refers to a sphere including all or part of the stored specific control points TCPx and having a minimum volume. This step S104 is a second step of setting the area A including the stored respective specific control points TCPx when the number of the stored specific control points TCPx is equal to or larger than N (N is an arbitrary integer of two or more).

Then, at step S105, a predetermined number of teaching candidate points PA are set within the area A. Setting the teaching candidate point refers to obtaining the teaching candidate point and preparing the teaching candidate point to be displayed at step S106, which will be described later. The teaching candidate point PA is a point as a candidate for teaching, e.g., a point as a candidate for the target position P2. In the embodiment, the teaching candidate point PA is set on the surface of the area A. This step S105 is a third step of setting the teaching candidate point PA within the area A.

Then, at step S106, the simulated image Ds as shown in FIG. 7 is displayed on the display 40. In the simulated image Ds, together with the virtual robot arm 10A, the area A, the teaching candidate points PA1, PA2, PA3, the select button B1, the select button B2, and the select button B3 are displayed. This step S106 is a fourth step of displaying the teaching candidate point PA set at the third step on the display 40.

Then, the user presses one of the select buttons B1 to B3, and thereby, teaching is completed.

As described above, the teaching method of the present disclosure is the teaching method of teaching the robot 1 having the robot arm 10, including the first step of storing the position or the attitude of the control point TCP when the first condition that the movement velocity of the control point TCP set for the robot arm 10 is equal to or lower than the predetermined first velocity or the angular velocity of the control point TCP is equal to or lower than the predetermined first angular velocity is satisfied during the teaching motion of the robot arm 10, the second step of setting the area A including the specific control points TCPx when the number of specific control points TCPx as the stored control points TCP is equal to or larger than N (N is an arbitrary integer of two or more), and the third step of setting the teaching candidate point PA within the area A. Thereby, even when the user with low skills perform teaching, locating may be easily performed by selection of the set teaching candidate point PA and quick and accurate teaching may be performed.

Further, the teaching method of the present disclosure has the fourth step of displaying the teaching candidate point PA set at the third step. Thereby, the user may easily visually perceive the teaching candidate point PA and teaching may be performed more quickly and accurately.

At the fourth step, the teaching candidate point PA is displayed together with the area A. Thereby, the relative position of the teaching candidate point PA to the area A may be perceived and the selection of the teaching candidate point PA may be performed more accurately. As a result, more quick and accurate teaching may be performed.

At the second step, the minimum sphere including the specific control points TCPx is set as the area A and, at the third step, the teaching candidate point PA is set on the surface of the sphere. The area A is the minimum sphere including the respective specific control points TCPx, and thereby, the shape of the area A may be easily perceived and the more highly effective area may be set. The teaching candidate point PA is set on the surface of the sphere, and thereby, the teaching candidate point PA may be easily perceived and the effectiveness and the adequateness of the teaching candidate point PA may be further increased.

At the third step, the teaching candidate point PA is preferentially set in a part in which the specific control points TCPx are eccentrically located within the area A. Thereby, the effectiveness and the adequateness of the teaching candidate point PA may be further increased.

### Second Embodiment

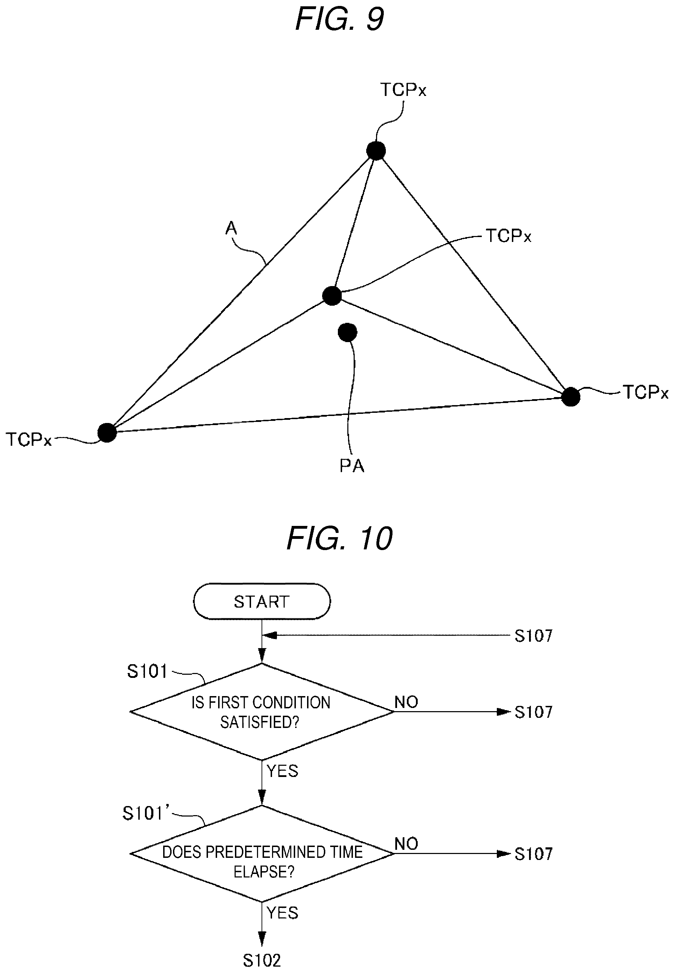

FIG. 9 is a schematic diagram showing an area and a teaching candidate point set by a second embodiment of the teaching apparatus of the present disclosure.

As below, the second embodiment of the teaching method and the teaching apparatus of the present disclosure will be explained with reference to the drawing, and the explanation will be made with a focus on differences from the first embodiment and the explanation of the same items will be omitted.

As shown in FIG. 9, the area A is a figure having the specific control points TCPx as vertices. In the illustrated configuration, the area A is a tetrahedron having the four specific control points TCPx as vertices. In this case, the teaching candidate point PA is set in a position at the center of gravity of the tetrahedron.

That is, at the second step, the figure having the respective specific control points TCPx as vertices is set as the area A and, at the third step, the teaching candidate point PA is set in the position at the center of gravity of the figure. Thereby, the area A may be set to be smaller with even less waste. Further, the teaching candidate point PA is set in the position at the center of gravity of the figure, and thereby, the effectiveness and the adequateness of the teaching candidate point PA may be further increased.

Note that the teaching candidate point PA may be set on the surface or inside of the tetrahedral area A.

Further, the number of specific control points TCPx is not limited to four. For example, when there are eight specific control points TCPx, a hexahedron having these points as vertices may be set as the area A.

In the second embodiment, the number of set teaching candidate points PA is not particularly limited, but may be two or more. As the number of teaching candidate points PA is larger, the more proper teaching candidate point PA that coincides with the target position P2 may be set, however, when the number is too large, the judgement for selection by the user may be hindered or take time. In consideration of the tendencies, the number of teaching candidate points PA is preferably set to 1 to 20 and more preferably set to 1 to 12.

### Third Embodiment

FIG. 10 is a flowchart showing an example of the teaching method executed by a third embodiment of the teaching apparatus of the present disclosure.

As below, the third embodiment of the teaching method and the teaching apparatus of the present disclosure will be explained with reference to the drawing, and the explanation will be made with a focus on differences from the first embodiment and the explanation of the same items will be omitted.

In the embodiment, in the flowchart shown in FIG. 8, step S101' is provided between step S101 and step S102. As shown in FIG. 10, at step S101', whether a predetermined time T elapses after the first condition is satisfied is determined. That is, whether the first condition continues in the time T or more is determined. The time T can be appropriately set, however, may be set to a time regarded as a time when the user hesitates, e.g., 0.4 seconds or more. Depending on the circumstances, the time may be set to 0.5 seconds or more or 1.0 second or more.

For example, in a case where the user applies too much force and erroneously reciprocates or swings the control point TCP near the target position P2, the first condition is momentarily satisfied when the movement direction of the control point TCP is reversed, however, the duration is extremely short and less than the time T, and the control point TCP is not stored as the specific control point TCPx. Thereby, unintended setting of the specific control point TCPx is excluded, and the effectiveness and the adequateness of the specific control points TCPx and the area A based thereon may be increased. Therefore, the effectiveness and the adequateness of the teaching candidate point PA may be further increased.

At step S101', when a determination that the time T elapses is made, the processing goes to step S102 and, with the control point TCP as the specific control point TCPx, the position and the attitude thereof are stored. At step S101', when a determination that the time T does not elapse and the first condition is no longer satisfied is made, the processing goes to step S107.

As described above, in the embodiment, the position or the attitude of the control point TCP when the time when the first condition continues is equal to or longer than the predetermined time T is stored at the first step. Thereby, the effectiveness of the specific control points TCPx may be further increased and, as a result, the effectiveness of the teaching candidate point PA may be further increased.

As above, the teaching method and the teaching apparatus of the present disclosure are explained based on the illustrated respective embodiments. However, said embodiments are not limiting the invention, which is defined by the appended claims.

## Claims

1. A teaching method of teaching a robot (1) having a robot arm (10), executed by a teaching apparatus (4), comprising:
a first step (S102) of storing a position and an attitude of a control point (TCP) set for the robot arm (10) when a first condition that a movement velocity (V) of the control point (TCP) is equal to or lower than a predetermined first velocity (V1) or an angular velocity (ω) of the control point (TCP) is equal to or lower than a predetermined first angular velocity (ω1) is satisfied during a teaching motion of the robot arm (10), wherein a distal end portion of an end effector (20) is the control point (TCP);
a second step (S104), when a number of specific control points (TCPx) as the stored control points is equal to or larger than N, N being an arbitrary integer of two or more, of setting an area (A) including the specific control points (TCPx), wherein the area (A) is a minimum sphere including all specific control points (TCPx); and
a third step (S105) of setting a teaching candidate point (PA) in a part in which the specific control points (TCPx) are eccentrically located within the area (A), wherein straight lines from a center of the area (A) toward the respective specific control points (TCPx) is set and the teaching candidate point (PA) is set at a predetermined interval at a point at which the respective straight lines intersect a surface of the area (A).

2. The teaching method according to claim 1, further comprising:
a fourth step (S106) of displaying the teaching candidate point (PA) set at the third step (S105).

3. The teaching method according to claim 2, wherein
the teaching candidate point (PA) is displayed together with the area (A) at the fourth step (S106).

4. The teaching method according to claim 1, wherein
the teaching candidate point (PA) is set on a surface of the sphere at the third step (S105).

5. A teaching apparatus (4) teaching a robot (1) having a robot arm (10), comprising:
a memory unit (45) storing a position and an attitude of a control point (TCP) set for the robot arm (10) when a first condition that a movement velocity (V) of the control point (TCP) is equal to or lower than a predetermined first velocity (V1) or an angular velocity (ω) of the control point (TCP) is equal to or lower than a predetermined first angular velocity (ω1) is satisfied during a teaching motion of the robot arm (10), wherein a distal end portion of an end effector (20) is the control point (TCP);
an area setting section (42A), when a number of specific control points (TCPx) as the control points stored in the memory unit (45) is equal to or larger than N, N being an arbitrary integer of two or more, setting an area (A) including the specific control points (TCPx), wherein the area (A) is a minimum sphere including all specific control points (TCPx); and
a teaching candidate point setting section (42B) setting a teaching candidate point (PA) in a part in which the specific control points (TCPx) are eccentrically located within the area (A), wherein straight lines from a center of the area (A) toward the respective specific control points (TCPx) may be set and the teaching candidate point (PA) is set at a predetermined interval at a point at which the respective straight lines intersect a surface of the area (A).

## Patentansprüche

1. Lehrverfahren zum Lehren eines Roboters (1) mit einem Roboterarm (10), das durch eine Lehrvorrichtung (4) ausgeführt wird, umfassend:
einen ersten Schritt (S102) zum Speichern einer Position und einer Lage eines Kontrollpunkts (TCP), der für den Roboterarm (10) eingestellt ist, wenn eine erste Bedingung, dass eine Bewegungsgeschwindigkeit (V) des Kontrollpunkts (TCP) gleich oder niedriger als eine vorbestimmte erste Geschwindigkeit (V1) oder eine Winkelgeschwindigkeit (ω) des Kontrollpunkts (TCP) gleich oder niedriger als eine vorbestimmte erste Winkelgeschwindigkeit (ω1) ist, während einer Lehrbewegung des Roboterarms (10) erfüllt ist, wobei ein distaler Endabschnitt eines Endeffektors (20) der Steuerpunkt (TCP) ist;
einen zweiten Schritt (S104), wenn eine Anzahl spezifischer Kontrollpunkte (TCPx) als die gespeicherten Kontrollpunkte gleich oder größer N ist, wobei N eine beliebige ganze Zahl von zwei oder mehr ist, zum Einstellen einer Fläche (A), die die spezifischen Kontrollpunkte (TCPx) beinhaltet, wobei die Fläche (A) eine minimale Kugel ist, die alle spezifischen Kontrollpunkte (TCPx) beinhaltet; und
einen dritten Schritt (S105) zum Einstellen eines Lehrkandidatenpunkts (PA) in einem Teil, in dem die spezifischen Kontrollpunkte (TCPx) exzentrisch in der Fläche (A) liegen, wobei gerade Linien von einem Mittelpunkt der Fläche (A) zu den jeweiligen spezifischen Kontrollpunkten (TCPx) eingestellt sind und der Lehrkandidatenpunkt (PA) in einem vorbestimmten Intervall an einem Punkt eingestellt ist, an dem die entsprechenden geraden Linien eine Oberfläche der Fläche (A) schneiden.

2. Lehrverfahren nach Anspruch 1, ferner umfassend:
einen vierten Schritt (S106) zum Anzeigen des Lehrkandidatenpunkts (PA), der in dem dritten Schritt (S105) eingestellt wird.

3. Lehrverfahren nach Anspruch 2, wobei
der Lehrkandidatenpunkt (PA) gemeinsam mit der Fläche (A) in dem vierten Schritt (S106) angezeigt wird.

4. Lehrverfahren nach Anspruch 1, wobei
der Lehrkandidatenpunkt (PA) auf einer Oberfläche der Kugel in dem dritten Schritt (S105) eingestellt wird.

5. Lehrvorrichtung (4), die einen Roboter (1) mit einem Roboterarm (10) lehrt, umfassend:
eine Speichereinheit (45), die eine Position und eine Lage eines Kontrollpunkts (TCP) speichert, der für den Roboterarm (10) eingestellt ist, wenn eine erste Bedingung, dass eine Bewegungsgeschwindigkeit (V) des Kontrollpunkts (TCP) gleich oder niedriger als eine vorbestimmte erste Geschwindigkeit (V1) oder eine Winkelgeschwindigkeit (ω) des Kontrollpunkts (TCP) gleich oder niedriger als eine vorbestimmte erste Winkelgeschwindigkeit (ω1) ist, während einer Lehrbewegung des Roboterarms (10) erfüllt ist, wobei ein distaler Endabschnitt eines Endeffektors (20) der Steuerpunkt (TCP) ist;
einen Flächeneinstellungsabschnitt (42A), wenn eine Anzahl spezifischer Kontrollpunkte (TCPx) als die in der Speichereinheit (45) gespeicherten Kontrollpunkte gleich oder größer N ist, wobei N eine beliebige ganze Zahl von zwei oder mehr ist, zum Einstellen einer Fläche (A), die die spezifischen Kontrollpunkte (TCPx) beinhaltet, wobei die Fläche (A) eine minimale Kugel ist, die alle spezifischen Kontrollpunkte (TCPx) beinhaltet; und
einen Lehrkandidatenpunkteinstellungsabschnitt (42B) zum Einstellen eines Lehrkandidatenpunkts (PA) in einem Teil, in dem die spezifischen Kontrollpunkte (TCPx) exzentrisch in der Fläche (A) liegen, wobei gerade Linien von einem Mittelpunkt der Fläche (A) zu den jeweiligen spezifischen Kontrollpunkten (TCPx) eingestellt werden können und der Lehrkandidatenpunkt (PA) in einem vorbestimmten Intervall an einem Punkt eingestellt ist, an dem die entsprechenden geraden Linien eine Oberfläche der Fläche (A) schneiden.

## Revendications

1. Procédé d'apprentissage pour l'apprentissage d'un robot (1) ayant un bras de robot (10), mis en œuvre par un dispositif d'apprentissage (4), comprenant :
une première étape (S102) consistant à mémoriser une position et une orientation d'un point de commande (TCP) défini pour le bras de robot (10) lorsqu'une première condition, selon laquelle une vitesse de déplacement (V) du point de commande (TCP) est égale ou inférieure à une première vitesse prédéterminée (V1) ou selon laquelle une vitesse angulaire (ω) du point de commande (TCP) est égale ou inférieure à une première vitesse angulaire prédéterminée (ω1), est satisfaite pendant un mouvement d'apprentissage du bras de robot (10), dans lequel une partie d'extrémité distale d'un effecteur terminal (20) constitue le point de commande (TCP) ;
une deuxième étape (S104) consistant, lorsqu'un nombre de points de commande spécifiques (TCPx), en tant que points de commande mémorisés, est égal ou supérieur à N, N étant un nombre entier arbitraire de deux ou plus, à définir une zone (A) incluant les points de commande spécifiques (TCPx), dans lequel la zone (A) est une sphère minimale incluant tous les points de commande spécifiques (TCPx) ; et
une troisième étape (S105) consistant à définir un point candidat d'apprentissage (PA) dans une partie dans laquelle les points de commande spécifiques (TCPx) sont placés de façon excentrée dans la zone (A), dans lequel des lignes droites partant d'un centre de la zone (A) vers les points de commande spécifiques (TCPx) respectifs sont définies, et le point candidat d'apprentissage (PA) est défini à un intervalle prédéterminé, au niveau d'un point où les lignes droites respectives coupent une surface de la zone (A).

2. Procédé d'apprentissage selon la revendication 1, comprenant en outre :
une quatrième étape (S106) consistant à afficher le point candidat d'apprentissage (PA) défini à la troisième étape (S105).

3. Procédé d'apprentissage selon la revendication 2, dans lequel
le point candidat d'apprentissage (PA) est affiché conjointement avec la zone (A) à la quatrième étape (S106).

4. Procédé d'apprentissage selon la revendication 1, dans lequel
le point candidat d'apprentissage (PA) est défini sur une surface de la sphère à la troisième étape (S105).

5. Dispositif d'apprentissage (4) destiné à l'apprentissage d'un robot (1) ayant un bras de robot (10), comprenant :
une unité de mémoire (45) mémorisant une position et une orientation d'un point de commande (TCP) défini pour le bras de robot (10) lorsqu'une première condition, selon laquelle une vitesse de déplacement (V) du point de commande (TCP) est égale ou inférieure à une première vitesse prédéterminée (V1) ou selon laquelle une vitesse angulaire (ω) du point de commande (TCP) est égale ou inférieure à une première vitesse angulaire prédéterminée (ω1), est satisfaite pendant un mouvement d'apprentissage du bras de robot (10), dans lequel une partie d'extrémité distale d'un effecteur terminal (20) constitue le point de commande (TCP) ;
une section de définition de zone (42A) définissant, lorsqu'un nombre de points de commande spécifiques (TCPx), en tant que points de commande mémorisés dans l'unité de mémoire (45), est égal ou supérieur à N, N étant un nombre entier arbitraire de deux ou plus, une zone (A) incluant les points de commande spécifiques (TCPx), dans lequel la zone (A) est une sphère minimale incluant tous les points de commande spécifiques (TCPx) ; et
une section de définition d'un point candidat d'apprentissage (42B) définissant un point candidat d'apprentissage (PA) dans une partie dans laquelle les points de commande spécifiques (TCPx) sont placés de façon excentrée dans la zone (A), dans lequel des lignes droites partant d'un centre de la zone (A) vers les points de commande spécifiques (TCPx) respectifs peuvent être définies, et le point candidat d'apprentissage (PA) est défini à un intervalle prédéterminé, au niveau d'un point où les lignes droites respectives coupent une surface de la zone (A).
